# EUROPÄISCHE PATENTSCHRIFT

(11) **EP 2 902 857 B1**
(45) Veröffentlichungstag und Bekanntmachung des Hinweises auf die Patenterteilung: **19.12.2018**
(21) Anmeldenummer: 14153072.5
(22) Anmeldetag: 29.01.2014
(51) Int. Cl.: G05B 19/042

(54) **Verfahren zur Bereitstellung von Funktionen innerhalb eines industriellen Automatisierungssystems und industrielles Automatisierungsystem**
Method for providing functions within an industrial automation system and industrial automation system
Procédé de mise à disposition de fonctions au sein d'un système d'automatisation industriel et système d'automatisation industriel

(43) Veröffentlichungstag der Anmeldung: 05.08.2015
(73) Patentinhaber: Siemens Aktiengesellschaft, 80333 München (DE)
(72) Erfinder: Eckl, Roland, 91301 Forchheim (DE); Henrich, Andreas, 68723 Oftersheim (DE); Herberth, Harald, 90522 Oberasbach (DE)

(56) Entgegenhaltungen:
- EP-A1- 2 221 682
- WO-A2-2008/135459
- DE-A1-102008 019 040

## Beschreibung

Industrielle Automatisierungssysteme dienen zur Überwachung, Steuerung und Regelung von technischen Prozessen, insbesondere im Bereich Fertigungs-, Prozeß- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Bei verteilten Diensten, deren Dienstkomponenten durch mehrere unterschiedliche Steuerungs- bzw. Rechnereinheiten zur Realisierung von Funktionen eines Automatisierungssystems bereitgestellt werden, bestehen hohe Anforderungen an eine Kommunikationsinfrastruktur des Automatisierungssystems. Zum einen sind üblicherweise Anforderungen nach einer echtzeitfähigen Kommunikation, die durch eine vergleichsweise hohe Zahl relativ kurzer Meldungen gekennzeichnet ist, zu erfüllen, andererseits sollen unterschiedliche Kommunikationsprotokolle für verteilte Dienste möglichst transparent nutzbar sein. Eine leistungsschwache Kommunikationsinfrastruktur kann eine fehlerfreie Bereitstellung eines Dienstes gefährden und sich nachteilig auf Systemstabilität und -verfügbarkeit auswirken. Aufgrund zeitkritischer Rahmenbedingungen in technischen Systemen, die mittels industrieller Automatisierungsgeräte automatisiert sind, werden in industriellen Kommunikationsnetzen zur Kommunikation zwischen Automatisierungsgeräten überwiegend Echzeit-Kommunikationsprotokolle, wie PROFINET, PROFIBUS oder Real-Time-Ethernet, verwendet.

Bei Zugriffen auf Diensten zugeordnete Daten und Meßwerte innerhalb eines industriellen Automatisierungssystems bestehen darüber hinaus oft höchst unterschiedliche Client-seitige Anforderungen hinsichtlich Verfügbarkeit bzw. Quality of Service sowie Datenfilterung bzw. Informationsvorverdichtung. Des weiteren bestehen Anforderung nach einer Erweiterbarkeit von bestehenden Diensten durch optionale bzw. zusätzliche Dienstkomponenten, ohne ein Daten- und Funktionsmodell, auf dem eine Implementierung eines bestehenden Dienstes basiert, substantiell ändern zu müssen.

Aus WO 2004/109415 A1 ist bekannt, Funktionen eines industriellen Automatisierungssystems durch Dienste bereit zu stellen und Funktionsblöcke in Standard-Funktionsblöcke und flexible Funktionsblöcke zu unterteilen. Dabei umfassen Eingangs- und Ausgangsparameter von Funktionsblöcken ein Wertefeld und ein Statusfeld, das wiederum Qualitäts-, Substatus-und Grenzwertattribute aufweist. Zur Konfigurationsunterstützung ist eine Schnittstelleneinrichtung vorgesehen.

In US 2004/230643 A1 ist ein Verfahren zur Bereitstellung von Diensten in einem mehrere Rechnereinheiten umfassen System beschrieben, bei dem Dienste mittels Enterprise Application Integration verfügbar gemacht werden. Dienste werden dabei über einen einheitlichen Find-Bind-Execute-Mechanismus aufgerufen. Darüber hinaus werden zwischen einem Client und einem Server TCP/IP-Pakete übermittelt, die Ergebnisse von logisch zusammenhängenden Operationen zusammenfassen können. Beispielsweise kann vorab ein Teilergebnis in einem TCP/IP-Paket zusammengefaßt werden, wenn das Ergebnis hinsichtlich seiner Nutzdaten zu groß für ein TCP/IP-Paket ist.

WO 2008/090216 A1 offenbart ein Automatisierungssystem mit Service-orientierter Architektur und dezentralen, verteilten Komponenten bzw. Geräten in flexibler und rekonfigurierbarer Produktionsumgebung, mit zumindest einem Host-Rechner, welcher über ein Datenübertragungsmittel wie Ethernet mit dem Service-orientierten Komponenten bzw. Geräten verbunden ist.

Allgemeine Aspekte von Dienst-orientierten Architekturen (Service-oriented Architecures - SOA) in Zusammenhang mit einer Verwendung standardisierter Kommunikationsprotokolle sind in F. James et al. "SERVICE-ORIENTED PARADIGMS IN INDUSTRIAL AUTOMATION", IEEE Transactions on Industrial Informatics, Vol. 1, No. 1, Februar 2005, ISSN 1551-3203, Seite 62-70 beschrieben. In F. Mustafa et al. "DYNAMIC WEB SERVICE COMPOSITION", 2009 International Conference on Computer Engineering and Technology, ICCET 2009, 22. Januar 2009, ISBN 978-1-4244-3334-6, Seite 463-467 ist Quality of Service (QoS) als Problemfeld im Kontext von Dienst-orientierten Architekturen genannt. Eine Unterteilung von Dienstkomponenten in dienstspezifische und nicht-dienstspezifische Komponenten ist dort jedoch nicht behandelt. Aus US 2004/221005 A1 ist bekannt, daß Dienste dienstspezifische und nicht-dienstspezifische Komponenten umfassen können. Jedoch ist dort nicht beschrieben, daß QoS-Maßnahmen durch nicht-dienstspezifische Komponenten sicherzustellen sind.

Aus EP 2 141 562 A1 ist bekannt, daß verteilte Dienste in einem mehrere vernetzte Rechnereinheiten umfassenden Automatisierungssystem innerhalb einer dienstorientierten Architektur bereitgestellt werden. Auf Seiten einer dienstanfordernden Rechnereinheit werden Dienstanforderungen nach dienstbereitstellenden Rechnereinheiten unterteilt und an diese zur Bearbeitung übermittelt. Auf Seiten einer dienstbereitstellenden Rechnereinheit werden empfangene Dienstanforderungen in logisch zusammenhängende Teilergebnisse liefernde Operationen unterteilt. Die dienstbereitstellende Rechnereinheit übermittelt bereits bei Vorliegen von einer Operation einer Dienstanforderung zugeordneten logisch zusammenhängenden Teilergebnissen eine Meldung mit den logisch zusammenhängenden Teilergebnissen an die dienstanfordernde Rechnereinheit.

In EP 2 221 682 A1 ist ein Verfahren zur Bereitstellung von Funktionen in einem industriellen Automatisierungssystem beschrieben, bei dem Funktionen des Automatisierungssystems durch Dienste verfügbar gemacht werden. Komponenten eines Dienstes werden in dienstspezifische Komponenten und in von mehreren unterschiedlichen Diensten wiederverwendbare Komponenten aufgeteilt. Dienstspezifische Komponenten und wiederverwendbare Komponenten weisen eine einheitliche Konfigurationsschnittstelle auf. Dienstkomponenten werden über die einheitliche Konfigurationsschnittstelle durch eine Dienstkonfigurationseinheit zu einem Dienst verknüpft. Funktionen zur Überwachung bzw. Steuerung einer definierten Dienstgüte werden den wiederverwendbaren Komponenten zugeordnet.

Entsprechend EP 2 224 297 A1 werden Komponenten eines Dienstes zur konsistenten Bereitstellung von Konfigurationsdaten in einem industriellen Automatisierungssystem über eine einheitliche Konfigurationsschnittstelle durch eine lokale Dienstkonfigurationseinheit zu einem Dienst verknüpft. Dienste werden mittels Konfigurationsdaten konfiguriert und aktiviert, wobei die Konfigurationsdaten Informationen zur Zuordnung von Diensten zu Steuerungseinheiten und zu Abhängigkeiten zwischen Diensten umfassen. Die Konfigurationsdaten werden durch einen Systemkonfigurationsdienst von einer Steuerungs- und Überwachungseinheit des Automatisierungssystems übernommen, überprüft und an Ziel-Steuerungseinheiten übermittelt. Die übermittelten Konfigurationsdaten werden durch den Ziel-Steuerungseinheiten zugeordnete lokale Dienstkonfigurationseinheiten auf Änderungen im Vergleich zu bisher verwendeten Konfigurationsdaten überprüft. Die lokalen Dienstkonfigurationseinheiten ermitteln anhand festgestellter Änderungen der Konfigurationsdaten Listen von Operationen zur Durchführung von Konfigurationsänderungen, wobei die Listen auf eine Minimierung von Dienstausfallzeiten optimiert sind. Der vorliegenden Erfindung liegt die Aufgabe zugrunde, ein Verfahren zur flexiblen und effizienten Bereitstellung von auf mehrere Steuerungs- bzw. Rechnereinheiten verteilten Funktionen in einem industriellen Automatisierungssystem zu schaffen sowie eine geeignete technische Realisierung des Verfahrens anzugeben.

Diese Aufgabe wird erfindungsgemäß durch ein Verfahren mit den in Anspruch 1 angegebenen Merkmalen und durch ein industrielles Automatisierungssystem mit den in Anspruch 8 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren werden Funktionen eines industriellen Automatisierungssystems durch Web-Anwendungen verfügbar gemacht, die Client-seitig während eines Steuerungsprogrammablaufs bzw. zur Laufzeit (Runtime) zu miteinander verknüpften Web-Anwendungen zusammengefaßt und an einer Client-seitigen Benutzerschnittstelle bereitgestellt werden.

Die Web-Anwendungen umfassen jeweils zumindest eine Anwendungskomponente, für die zur Laufzeit ; jeweils zumindest eine Komponenteninstanz erzeugt wird. Vorzugsweise umfaßt die Client-seitige Benutzerschnittstelle einen Web-Browser. Außerdem werden die Web-Anwendungen mittels einer einheitlichen Anwendungsprogrammierschnittstelle bereitgestellt, die eine von mehreren Anwendungskomponenten genutzte komponentenübergreifende Anwendungsprogrammierschnittstelle zum Initialisieren und Entladen von Anwendungskomponenten sowie eine komponentenspezifische Anwendungsprogrammierschnittstelle zur Ereignisbehandlung und Bereitstellung von Komponentenfunktionen umfaßt. Für komponentenübergreifende Funktionen wird zumindest ein Dienst bereitgestellt, der von mehreren Anwendungskomponenten genutzt wird. Den Anwendungskomponenten werden jeweils Metadaten zur Deklaration von Funktionen und Abhängigkeiten zugeordnet.

Die Anwendungskomponenten umfassen erfindungsgemäß jeweils eine Datenschnittstelle für einen Datenzugriff durch andere Anwendungskomponenten. Die Komponenteninstanzen werden zur Laufzeit mittels einer von der einheitlichen Anwendungsprogrammierschnittstelle umfaßten Anwendungsprogrammierschnittstelle zur Festlegung von Interaktionen zwischen Anwendungskomponenten verknüpft. Auf diese Weise kann innerhalb eines industriellen Automatisierungssystems eine flexible Integration von lose gekoppelten Diensten bzw. Funktionen zur Laufzeit realisiert werden, ohne daß eine solche Integration individuellen Programmierungsaufwand erfordert. Die Interaktionen zwischen Anwendungskomponenten können beispielsweise Datenereignisse bzw. durch Benutzeraktionen ausgelöst werden.

Entsprechend einer vorteilhaften Ausgestaltung der vorliegenden Erfindung werden miteinander verknüpfte Komponenteninstanzen innerhalb eines an der Client-seitigen Benutzerschnittstelle visualisierten Steuerungsobjekt ausgeführt. Das Steuerungsobjekt kann beispielsweise ein DOM-Dokument entsprechend Document Object Model oder ein JavaScript-Window-Objekt sein. Damit kann wahlweise eine verbesserte Systemleistung oder Komponentenisolation erzielt werden. Darüber hinaus können miteinander verknüpfte Komponenteninstanzen entsprechend einer weiteren Ausgestaltung der vorliegenden Erfindung isoliert innerhalb separater Sub-Steuerungsobjekte eines an der Client-seitigen Benutzerschnittstelle visualisierten Steuerungsobjekt ausgeführt werden. Die Sub-Steuerungsobjekte können beispielsweise iFrames sein.

Das erfindungsgemäße industrielle Automatisierungssystem umfaßt mehrere Steuerungseinheiten, die jeweils zumindest einen Web-Server zur Bereitstellung von Automatisierungsfunktionen als Web-Anwendungen umfassen. Zusätzlich ist zumindest eine Bedien- und Beobachtungsstation vorgesehen, die zumindest einen Web-Client zur Client-seitigen Verknüpfung von Web-Anwendungen während eines Steuerungsprogrammablaufs an einer Client-seitigen Benutzerschnittstelle aufweist. Die Web-Anwendungen umfassen jeweils zumindest eine Anwendungskomponente, für die zur Laufzeit jeweils zumindest eine Komponenteninstanz erzeugt ist. Außerdem sind die Web-Anwendungen mittels einer einheitlichen Anwendungsprogrammierschnittstelle bereitgestellt, die eine von mehreren Anwendungskomponenten genutzte komponentenübergreifende Anwendungsprogrammierschnittstelle zum Initialisieren und Entladen von Anwendungskomponenten sowie eine komponentenspezifische Anwendungsprogrammierschnittstelle zur Ereignisbehandlung und Bereitstellung von Komponentenfunktionen umfaßt. Des weiteren ist die einheitliche Anwendungsprogrammierschnittstelle zur Bereitstellung zumindest eines von mehreren Anwendungskomponenten genutzten Dienstes für komponentenübergreifende Funktionen ausgestaltet und eingerichtet. Den Anwendungskomponenten sind jeweils Metadaten zur Deklaration von Funktionen und Abhängigkeiten zugeordnet. Darüber hinaus umfassen die Anwendungskomponenten jeweils eine Datenschnittstelle für einen Datenzugriff durch andere Anwendungskomponenten. Die Komponenteninstanzen sind zur Laufzeit mittels einer von der einheitlichen Anwendungsprogrammierschnittstelle umfaßten Anwendungsprogrammierschnittstelle zur Festlegung von Interaktionen zwischen Anwendungskomponenten verknüpft.

Die vorliegende Erfindung wird nachfolgend an einem Ausführungsbeispiel anhand der Zeichnung näher erläutert. Es zeigt
- Figur 1: eine schematische Darstellung eines industriellen Automatisierungssystem mit verteilt bereitgestellten Funktionen,
- Figur 2: eine schematische Darstellung einer Anwendungsprogrammierschnittstelle und einer Datenschnittstelle zur Bereitstellung der Funktionen des industriellen Automatisierungssystems als Web-Anwendungen.

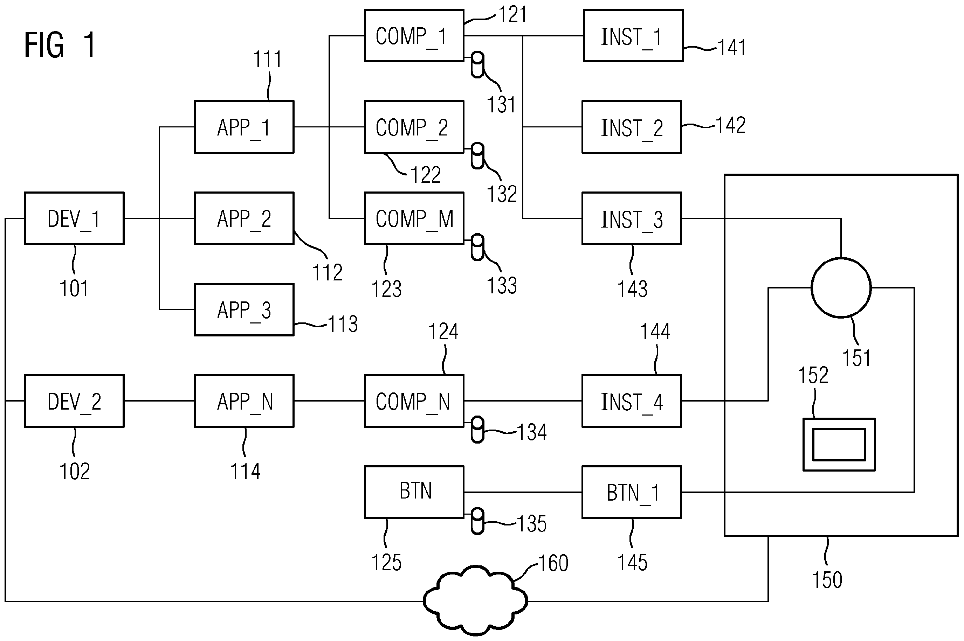

Das in Figur 1 dargestellte industrielle Automatisierungssystem umfaßt mehreren Steuerungseinheiten 101-102, die jeweils zumindest einen Web-Server 111-114 zur Bereitstellung von Automatisierungsfunktionen als Web-Anwendungen umfassen. Die Steuerungseinheiten 101-102 sind über ein Kommunikationsnetz 160 mit zumindest einer Bedien- und Beobachtungsstation 150 verbunden, die einen Web-Client 151 zur Client-seitigen Verknüpfung von Web-Anwendungen zur Laufzeit an einer Client-seitigen Benutzerschnittstelle 152 aufweist. Dabei umfaßt die Client-seitige Benutzerschnittstelle 152 im vorliegenden Ausführungsbeispiel einen Web-Browser.

Die Web-Anwendungen umfassen jeweils zumindest eine Anwendungskomponente 121-125, für die zur Laufzeit jeweils zumindest eine Komponenteninstanz 141-145 erzeugt wird. Zu diesen Anwendungskomponenten 121-125 können beispielsweise auch durch eine einheitliche Anwendungsprogrammierschnittstelle bereitgestellte graphische Benutzerschnittstellenobjekte 125, wie Buttons, zählen. Auch für derartige Benutzerschnittstellenobjekte 125 werden Komponenteninstanzen 145 erzeugt. Des weiteren sind den Anwendungskomponenten 121-125 jeweils Metadaten 131-135 zur Deklaration von Funktionen und Abhängigkeiten zugeordnet. Die Metadaten 131-135 können beispielsweise zur Laufzeit durch die jeweilige Anwendungskomponente 121-125 erzeugt werden und Angaben zu Name, Version und Einschränkungen der jeweiligen Anwendungskomponente 121-125 umfassen.

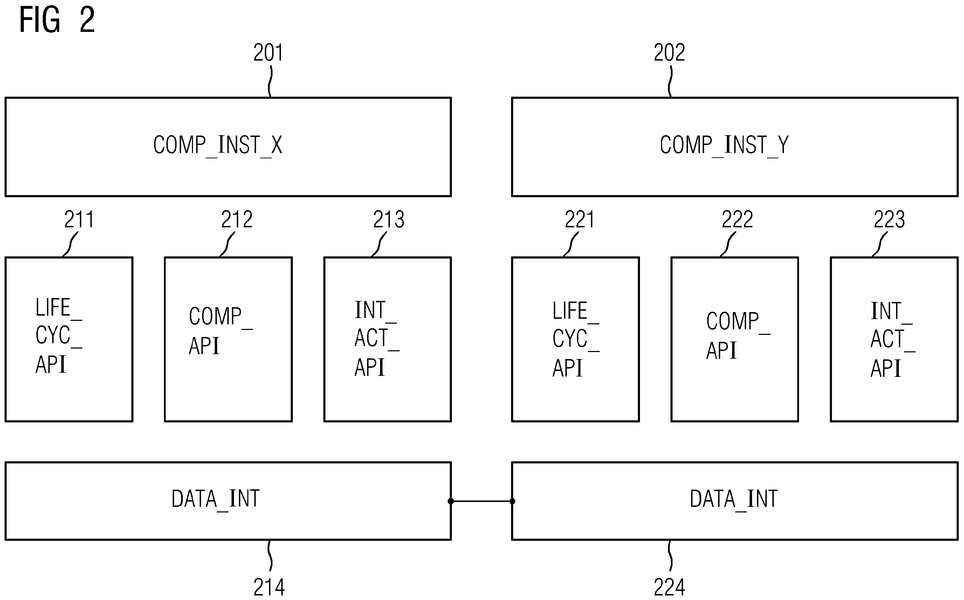

Die Komponenteninstanzen 201-202 der Web-Anwendungen werden entsprechend Figur 2 mittels der einheitlichen Anwendungsprogrammierschnittstelle bereitgestellt, die eine komponentenübergreifende Anwendungsprogrammierschnittstelle (Life Cycle API) 221, 221 zum Initialisieren und Entladen von Anwendungskomponenten sowie eine komponentenspezifische Anwendungsprogrammierschnittstelle (Component API) 212, 222 zur Ereignisbehandlung und Bereitstellung von Komponentenfunktionen umfaßt. Vorteilhafterweise wird für komponentenübergreifende Funktionen zumindest ein Dienst bereitgestellt wird, der von mehreren Anwendungskomponenten genutzt wird. Mittels der komponentenspezifischen Anwendungsprogrammierschnittstelle 212, 222 werden beispielsweise komponentenspezifische Funktionen und Ereignisse abgebildet bzw. realisiert.

Darüber hinaus umfassen die Anwendungskomponenten jeweils eine Datenschnittstelle 214, 224 für einen Datenzugriff durch andere Anwendungskomponenten. Mittels der Datenschnittstelle 214, 224 wird beispielsweise festgelegt, ob Daten lesend, schreibend oder sowohl lesend als auch schreibend verfügbar gemacht werden, und wann bzw. wie Benachrichtigungen über Datenänderungen gesendet werden. Die einheitliche Anwendungsprogrammierschnittstelle umfaßt zusätzlich eine Anwendungsprogrammierschnittstelle (Interaction API) 213, 223 zur Festlegung von Interaktionen zwischen Anwendungskomponenten. Hiermit werden Komponenteninstanzen 143-145 Client-seitig über den Web-Client 151 verknüpft wie dies in Figur 1 exemplarisch dargestellt ist. Die Interaktionen zwischen Anwendungskomponenten können beispielsweise durch Datenereignisse bzw. durch Benutzeraktionen ausgelöst werden.

Die Anwendungsprogrammierschnittstelle zur Festlegung von Interaktionen zwischen Anwendungskomponenten wird über ein Web-Portal bereitgestellt. Diese Interaktionen können datengetrieben erfolgen, indem beispielsweise Datenausgänge von Anwendungskomponenten mit Dateneingängen anderer Anwendungskomponenten verschaltet werden. Dabei führen Datenereignisse zu Aktionen. Zusätzlich oder alternativ zu datengetriebenen Interaktionen können auch benutzeraktionsgetriebene Interaktionen festgelegt werden, beispielsweise per Drag and Drop zwischen Anwendungskomponenten. Über das Web-Portal werden im vorliegenden Ausführungsbeispiel außerdem zentrale Dienste bereitgestellt, die durch eine Vielzahl von Anwendungskomponenten genutzt werden. Hierzu zählen beispielsweise Dienste, wie Single-Sign-On oder Browser-lokale Datenpersistenz.

Das Web-Portal ermöglicht insbesondere zwei unterschiedliche Integrationsmöglichkeiten von Anwendungskomponenten, einerseits eine direkte Integration, andererseits eine isolierte Integration. Welche Integrationsmöglichkeit besonders vorteilhaft ist, hängt vom jeweiligen Anwendungsfall ab. Bei der direkten Integration von Anwendungskomponenten werden miteinander verknüpfte Komponenteninstanzen innerhalb eines an der Client-seitigen Benutzerschnittstelle visualisierten Steuerungsobjekt ausgeführt. Dabei kann das Steuerungsobjekt insbesondere ein DOM-Dokument entsprechend Document Object Model oder ein JavaScript-Window-Objekt sein. Dies ermöglicht eine sehr gute System-Performance sowie eine effiziente Nutzung gemeinsamer Ressourcen. Zu solchen gemeinsamen Ressourcen zählen beispielsweise JS Libraries.

Bei einer isolierten Integration von Anwendungskomponenten werden miteinander verknüpfte Komponenteninstanzen isoliert innerhalb separater Sub-Steuerungsobjekte eines an der Client-seitigen Benutzerschnittstelle visualisierten Steuerungsobjekt ausgeführt. Dabei können die Sub-Steuerungsobjekte insbesondere iFrames sein. Dies bietet als Vorteil, daß Anwendungskomponenten beliebig geladen oder entladen werden können, und daß das Web-Portal Ressourcen auf einfache Weise durch Schließen von iFrames freigibt.

Bei Bedarf kann das Web-Portal eine direkt eingebundene Anwendungskomponente in eine Isolation zwingen. Dies geschieht dabei für die jeweilige Anwendungskomponente transparent, indem das Web-Portal Infrastruktur innerhalb eines iFrames zur Verfügung stellt. Für die Anwendungskomponente erscheint dies, als sei sie im Web-Portal direkt eingebunden und dort die einzige Anwendungskomponente. Alle Aufrufe auf der Anwendungsprogrammierschnittstelle zur Festlegung von Interaktionen werden dabei jedoch über Proxys weitergeleitet. Hierzu wird dieselbe Infrastruktur für eine Kommunikation zwischen Anwendungskomponenten und Web-Portal genutzt wie beim gezielt isolierten Integration. Das Web-Portal ermöglicht dabei verschiedene Sichten zu generieren, in denen Anwendungskomponente plaziert und miteinander bzw. mit dem Web-Portal verschaltet werden.

Über ein Web-Portal-Engineering-System, können Systemintegratoren eigene Web-Portale erzeugen und konfigurieren. Dabei werden die Meta-Informationen sowie Selbstbeschreibungen von Anwendungskomponenten ausgelesen und zum Plazieren bzw. Verschalten verwendet. Dabei können Selbstbeschreibungen aus verschiedenen Quellen abgerufen werden, beispielsweise von einem der jeweiligen Anwendungskomponente zugeordneten Server oder von einem zentralen Engineering System. Dies ermöglicht eine Web-Portal-Darstellung mit verschiedenen Sichten und konkreten Integrationsbeschreibungen. Durch ein Engineering-System kann beispielsweise ein grafischer Editor zur Anordnung und Verschaltung von Anwendungskomponenten bereitgestellt werden. Grundsätzlich kann das Engineering-System in das Web-Portal selbst integriert sein. Dadurch wird eine freie Anpassung des Web-Portals durch dessen Benutzer ermöglicht.

Gegenüber einer Server-seitiger Integration von Automatisierungsfunktionen ermöglicht das vorliegende Ausführungsbeispiel eine flexible Erweiterbarkeit um neue Komponenten bzw. Anwendungen. Aufgrund einer Verknüpfung von Anwendungskomponenten zur Laufzeit ist zudem weniger Abstimmungsaufwand erforderlich.

Im Vergleich zu einer Integration von Automatisierungsfunktionen mittels Application-Servern können mit dem vorliegenden Ausführungsbeispiel Anwendungen verwendet werden, die grundsätzlich auf beliebigen serverseitigen Konzepten zur Bereitstellung von Anwendungskomponenten basieren. Darüber hinaus können Anwendungskomponenten beim vorliegenden Ausführungsbeispiel unabhängig voneinander ausgeführt und in Anwendungen bzw. Portale anderer Anbieter integriert werden.

Anders als bei Server-seitigen Portalen erfolgt eine Kommunikation zwischen Anwendungskomponenten und deren Backend beim vorliegenden Ausführungsbeispiel direkt und nicht durch einen Umweg über einen Portal-Server. Anwendungskomponenten sind damit nicht auf eine begrenzte Auswahl verwendbarer Kommunikationsprotokolle beschränkt, sondern es können je nach individuellen Anwendungserfordernissen besonders vorteilhafte Kommunikationsverfahren angewendet werden. Gegenüber einer Mash-Up-Anwendungsintegration sind mit dem vorliegenden Ausführungsbeispiel erweiterte Anwendungsmöglichkeiten realisierbar, beispielsweise Drag and Drop, Navigation aus Anwendung heraus oder zentrale Authentifizierung.

Zusätzlich zu einer Bereitstellung von Anwendungskomponenten mittels Web-Portal können Komponenten-Container verwendet werden, die eine Einbindung von Anwendungskomponenten des Web-Portals in andere Anwendungen ermöglichen. Der Komponenten-Container stellt der jeweiligen Anwendungskomponente dabei Portal-Infrastruktur zur Verfügung. Grundsätzlich kann das vorliegende Ausführungsbeispiel mittels alternativer Benutzeroberflächen-Konzepte realisiert werden. Beispielsweise können anstatt einer Verwendung eines Browsers mit HTML und JavaScript native Anwendungen vorgesehen sein, die ein gemeinsames Interface eine Integration von Anwendungsdaten zur Verfügung stellen. In diesem Fall können verschiedene Anwendungskomponenten beispielsweise mittels Betriebssystem-Unterstützung, wie Win32-API unter Windows, miteinander an der Benutzeroberfläche kombiniert werden.

## Patentansprüche

1. Verfahren zur Bereitstellung von Funktionen innerhalb eines industriellen Automatisierungssystems, bei dem
- Funktionen des Automatisierungssystems durch Web-Anwendungen verfügbar gemacht werden, die Client-seitig während eines Steuerungsprogrammablaufs zu miteinander verknüpften Web-Anwendungen zusammengefaßt und an einer Client-seitigen Benutzerschnittstelle (152) bereitgestellt werden,
- die Web-Anwendungen jeweils zumindest eine Anwendungskomponente (121-125) umfassen, für die zur Laufzeit jeweils zumindest eine Komponenteninstanz (141-145; 201-202) erzeugt wird,
**dadurch gekennzeichnet, daß**
- die Web-Anwendungen mittels einer einheitlichen Anwendungsprogrammierschnittstelle bereitgestellt werden, die eine von mehreren Anwendungskomponenten genutzte komponentenübergreifende Anwendungsprogrammierschnittstelle (211, 221) zum Initialisieren und Entladen von Anwendungskomponenten sowie eine komponentenspezifische Anwendungsprogrammierschnittstelle (212-221) zur Ereignisbehandlung und Bereitstellung von Komponentenfunktionen umfaßt, wobei für komponentenübergreifende Funktionen zumindest ein Dienst bereitgestellt wird, der von mehreren Anwendungskomponenten genutzt wird,
- den Anwendungskomponenten (121-125) jeweils Metadaten (131-135) zur Deklaration von Funktionen und Abhängigkeiten zugeordnet werden,
- die Anwendungskomponenten (121-125) jeweils eine Datenschnittstelle (214, 224) für einen Datenzugriff durch andere Anwendungskomponenten umfassen,
- die Komponenteninstanzen (141-145; 201-202) zur Laufzeit mittels einer von der einheitlichen Anwendungsprogrammierschnittstelle umfaßten Anwendungsprogrammierschnittstelle (213, 223) zur Festlegung von Interaktionen zwischen Anwendungskomponenten verknüpft werden.

2. Verfahren nach Anspruch 1,
bei dem die Interaktionen durch Datenereignisse und/oder durch Benutzeraktionen ausgelöst werden.

3. Verfahren nach einem der Ansprüche 1 oder 2,
bei dem miteinander verknüpfte Komponenteninstanzen innerhalb eines an der Client-seitigen Benutzerschnittstelle visualisierten Steuerungsobjekt ausgeführt werden.

4. Verfahren nach Anspruch 3,
bei dem das Steuerungsobjekt ein DOM-Dokument entsprechend Document Object Model oder ein JavaScript-Window-Objekt ist.

5. Verfahren nach einem der Ansprüche 1 oder 2,
bei dem miteinander verknüpfte Komponenteninstanzen isoliert innerhalb separater Sub-Steuerungsobjekte eines an der Client-seitigen Benutzerschnittstelle visualisierten Steuerungsobjekt ausgeführt werden.

6. Verfahren nach Anspruch 5,
bei dem die Sub-Steuerungsobjekte iFrames sind.

7. Verfahren nach einem der Ansprüche 1 bis 6,
bei dem die Client-seitige Benutzerschnittstelle einen Web-Browser umfaßt.

8. Industrielles Automatisierungssystem mit
- mehreren Steuerungseinheiten (101-102), die jeweils zumindest einen Web-Server (111-114) umfassen, der zur Bereitstellung von Automatisierungsfunktionen als Web-Anwendungen ausgestaltet und eingerichtet ist,
- zumindest einer Bedien- und Beobachtungsstation (150), die zumindest einen Web-Client (151) aufweist, der zur Client-seitigen Verknüpfung von Web-Anwendungen während eines Steuerungsprogrammablaufs an einer Client-seitigen Benutzerschnittstelle (152) ausgestaltet und eingerichtet ist,
- wobei die Web-Anwendungen jeweils zumindest eine Anwendungskomponente (121-125) umfassen, für die zur Laufzeit jeweils zumindest eine Komponenteninstanz (141-145; 201-202) erzeugt ist,
**dadurch gekennzeichnet, daß**
- eine einheitliche Anwendungsprogrammierschnittstelle eine von mehreren Anwendungskomponenten genutzte komponentenübergreifende Anwendungsprogrammierschnittstelle (211, 221), die zum Initialisieren und Entladen von Anwendungskomponenten ausgestaltet und eingerichtet ist, sowie eine komponentenspezifische Anwendungsprogrammierschnittstelle (212, 222) umfaßt, die zur Ereignisbehandlung und Bereitstellung von Komponentenfunktionen ausgestaltet und eingerichtet ist, wobei die einheitliche Anwendungsprogrammierschnittstelle zur Bereitstellung der Web-Anwendungen und zur Bereitstellung zumindest eines von mehreren Anwendungskomponenten genutzten Dienstes für komponentenübergreifende Funktionen ausgestaltet und eingerichtet ist,
- den Anwendungskomponenten (121-125) jeweils Metadaten (131-135) zur Deklaration von Funktionen und Abhängigkeiten zugeordnet sind,
- die Anwendungskomponenten (121-125) jeweils eine Datenschnittstelle (214, 224) für einen Datenzugriff durch andere Anwendungskomponenten umfassen,
- die Komponenteninstanzen (141-145; 201-202) zur Laufzeit mittels einer von der einheitlichen Anwendungsprogrammierschnittstelle umfaßten Anwendungsprogrammierschnittstelle (213, 223) verknüpft sind, die zur Festlegung von Interaktionen zwischen Anwendungskomponenten ausgestaltet und eingerichtet ist.

## Claims

1. Method for providing functions within an industrial automation system, in which
- functions of the automation system are made available by web applications that are combined by the client during control program execution to form interlinked web applications and are provided on a user interface (152) on the client,
- the web applications respectively comprise at least one application component (121-125) that respectively have at least one component instance (141-145; 201-202) produced for them at runtime,
**characterized in that**
- the web applications are provided by means of a standard application programming interface that comprises a cross-component application programming interface (211, 221), used by a plurality of application components, for initializing and unloading application components and also a component-specific application programming interface (212-221) for event handling and providing component functions, wherein at least one service is provided for cross-component functions, said service being used by a plurality of application components,
- the application components (121-125) are respectively assigned metadata (131-135) for declaring functions and dependencies,
- the application components (121-125) respectively comprise a data interface (214, 224) for data access by other application components,
- the component instances (141-145; 201-202) are linked at runtime by means of an application programming interface (213, 223), encompassed by the standard application programming interface, for the purpose of stipulating interactions between application components.

2. Method according to Claim 1,
in which the interactions are initiated by data events and/or by user actions.

3. Method according to either of Claims 1 and 2,
in which interlinked component instances are executed within a control object that is visually displayed on the user interface on the client.

4. Method according to Claim 3,
in which the control object is a DOM document corresponding to Document Object Model or a JavaScript Window Object.

5. Method according to either of Claims 1 and 2,
in which interlinked component instances are executed in isolation within separate subordinate control objects of a control object that is visually displayed on the user interface on the client.

6. Method according to Claim 5,
in which the subordinate control objects are iFrames.

7. Method according to one of Claims 1 to 6,
in which the user interface on the client comprises a web browser.

8. Industrial automation system having
- a plurality of control units (101-102) that respectively comprise at least one web server (111-114) that is designed and configured for providing automation functions as web applications,
- at least one operator control and monitoring station (150) that has at least one web client (151) that is designed and configured for linking web applications on the client during control program execution on a user interface (152) on the client,
- wherein the web applications respectively comprise at least one application component (121-125) that respectively have at least one component instance (141-145; 201-202) produced for them at runtime,
**characterized in that**
- a standard application programming interface comprises a cross-component application programming interface (211,221) used by a plurality of application components, that is designed and configured for initializing and unloading application components and also a component-specific application programming interface (212,222) that is designed and configured for event handling and providing component functions, wherein the standard application programming interface is designed and configured for providing the web applications and for providing at least one service, used by a plurality of application components, for cross-component functions,
- the application components (121-125) respectively have associated metadata (131-135) for declaring functions and dependencies,
- the application components (121-125) respectively comprise a data interface (214, 224) for data access by other application components,
- the component instances (141-145; 201-202) are linked at runtime by means of an application programming interface (213, 223), encompassed by the standard application programming interface, that is designed and configured for stipulating interactions between application components.

## Revendications

1. Procédé de mise à disposition de fonctions au sein d'un système d'automatisation industriel, dans lequel
- on rend disponibles des fonctions du système d'automatisation par des applications web, qui sont, du côté client pendant un déroulement de programme de commande, rassemblées en des applications web combinées entre elles et mises à disposition sur une interface (152) d'utilisateur du côté du client,
- les application web comprennent chacune au moins un composant (121 à 125) d'application, pour lequel il est produit, pendant le temps de déroulement, respectivement au moins une instance (141 à 145; 201 à 202) de composant,
**caractérisé en ce que**
- on met les applications web à disposition au moyen d'une interface unitaire de programmation d'application, qui comprend une interface (211, 221) de programmation d'application empiétant sur des composants et utilisée par plusieurs composants d'application pour l'initialisation et le déchargement de composants d'application, ainsi qu'une interface (212 à 221) de programmation d'application spécifique au composant, pour le traitement d'événement et la mise à disposition de fonctions de composant, dans lequel, pour des fonctions empiétant sur des composants, on met à disposition au moins un service, qui est utilisé par plusieurs composants d'application,
- aux composants (121 à 125) d'application, on affecte respectivement des métadonnées (131 à 135) de déclaration de fonctions et de dépendance,
- les composants (121 à 125) d'application comprennent chacun une intervalle (214, 224) de données pour un accès aux données par d'autres composants d'application,
- on combine, pour fixer des interactions entre des composants d'application, les instances (141 à 145; 201 à 202) de composant au temps de déroulement, au moyen d'une interface (213, 223) de programmation d'application comprise par l'interface de programmation d'application unitaire.

2. Procédé suivant la revendication 1,
dans lequel on déclenche les interactions par des événements de données et/ou par des actions d'utilisateurs.

3. Procédé suivant l'une des revendications 1 ou 2,
dans lequel on réalise des instances de composant combinées entre elles au sein d'un objet de commande visualisé sur l'interface d'utilisateur du côté du client.

4. Procédé suivant la revendication 3,
dans lequel l'objet de commande est un Document Object Model correspondant à DOM-Dokument ou un JavaScript-Window-Object.

5. Procédé suivant l'une des revendications 1 ou 2,
dans lequel on réalise des instances de composant combinées entre elles, de manière isolée au sein de sous-objets de commande distincts, d'un objet de commande visualisé sur l'interface d'utilisateur du côté du client.

6. Procédé suivant la revendication 5,
dans lequel les sous-objets de commande sont des trames i.

7. Procédé suivant l'une des revendications 1 à 6,
dans lequel l'interface d'utilisateur du côté du client comprend un navigateur web.

8. Système d'automatisation industrielle, comprenant
- plusieurs unités (101 à 102) de commande, qui comprennent chacune au moins un serveur (111 à 114) web, conformé et conçu pour mettre à disposition des fonctions d'automatisation sous la forme d'application web,
- au moins un poste (150) de service et d'observation, qui a au moins un client web (151), qui est conformé et conçu pour la combinaison du côté du client d'applications web pendant un déroulement de programme de commande sur une interface (152) d'utilisateur du côté du client,
- dans lequel les applications web comprennent chacune au moins une composante (121 à 125) d'application, pour laquelle il est produit, pour le temps de déroulement, respectivement au moins une instance (141 à 145; 201 à 202) de composants,
**caractérisé en ce que**
- une interface de programmation d'application unitaire comprend une interface de programmation d'application, qui est utilisée par plusieurs composants d'application, qui empiète sur des composants et qui est conformée et conçue pour initialiser et décharger des composant d'application, ainsi qu'une interface (212, 222) de programmation d'application, qui est spécifique au composant et qui est conformée et conçue pour traiter les événements et mettre à disposition les fonctions de composant, l'interface de programmation d'application unitaire étant conformée et conçue pour mettre à disposition les applications web et pour mettre à disposition au moins un service utilisé par plusieurs composants d'application pour des fonctions empiétant sur des composants,
- aux composants (121 à 125) d'application sont affectées respectivement des métadonnées (131 à 135) de déclarations de fonction et de dépendances,
- les composants (121 à 125) d'application comprennent chacun une interface (214, 224) de données pour un accès aux données par d'autres composants d'application,
- les instances (141 à 145; 201 à 202) de composants sont, pour le temps de déroulement, combinées au moyen d'une interface (213, 223) de programmation d'application comprise par l'interface de programmation d'application unitaire et conformées et conçues pour la fixation d'interactions entre des composants d'application.
